# EUROPEAN PATENT SPECIFICATION

(11) **EP 1 222 951 B1**
(45) Date of publication and mention of the grant of the patent: **02.06.2004**
(21) Application number: 02250160.5
(22) Date of filing: 10.01.2002
(51) Int. Cl.: B01D 46/24, B01D 29/11, B01D 35/30

(54) **Filter**
Filter
Filtre

(30) Priority: 10.01.2001 GB 0100647
(43) Date of publication of application: 17.07.2002
(73) Proprietor: Walker Filtration Limited, Washington, Tyne & Wear NE37 3ES (GB)
(72) Inventor: Merrie, Kenneth, Houghton-le-Spring, Durham DH5 8NX (GB); Taggart, Richard Lawrence, Chester-le-Street, Durham DH3 4AE (GB)
(74) Representative: Naylor, Matthew John

(56) References cited:
- EP-A- 0 791 387
- EP-A- 0 811 411
- EP-A- 0 956 892
- EP-A- 1 008 375
- US-A- 5 858 227

## Description

This invention relates to filter units, which units may be embodied in pumps, compressors and the like, or may be provided as separate units for installation in fluid flow lines.

Filter units conventionally incorporate cartridges located in the flow path of a fluid to be monitored so that the fluid flows therethrough, the cartridges being located in an associated housing.

Filter cartridges need regular cleaning or replacing, and, in order to gain access to the cartridge for removal purposes, it is usually necessary first of all to remove a cover or equivalent component from the housing, and then to take the cartridge out the housing.

Such a procedure can be laborious and time consuming, often needing specialist tools to remove the cover.

It has been proposed, for example in EP 0956 892A1, to overcome these problems by providing a filter unit in which the filter cartridge is mounted on a removable cover for the housing, whereby the cartridge and cover comprise a single unit, removal of the cover from the housing resulting in withdrawal of the cartridge therefrom.

The cover may be secured to the housing in a variety of different ways, for example by screwing or by a bayonet connection.

In all cases, however, it is essential that the cover is a sealing fit in its associated aperture in the housing to prevent leakage. Therefore the external face of the cover and the mating internal face of the housing must be accurately machined to ensure leak-tight co-operation therebetween.

The housings are conventionally metal castings, and the subsequent machining of screw threads, bayonet fittings and the like on the castings can itself be a laborious and time consuming exercise, adding considerably to the expense of the equipment.

It would be desirable to be able to provide a filter unit with a removable cartridge/cover which required less accurate machining of the housing than heretofore.

Accordingly to the present invention, there is provided a filter unit comprising a housing through a wall of which is formed an aperture, an annular insert of a plastics material located in said aperture to make sealing contact with the defining walls of the aperture, a closure member removably mounted in, to make sealing engagement with, the annular insert, and a filter cartridge mounted on the closure member to extend into the housing, the closure member and filter cartridge being locatable on and removable from the housing as a unit.

It will thus be appreciated that, with such an arrangement, the only accurate machining that needs to be effected to the housing is to the aperture therein receiving the insert, more particularly the thickness of the housing wall in which the aperture is formed, and the diameter of the aperture itself. All other machining to ensure a leak-tight mounting of the cartridge in the housing can be effected to the annular insert and to the closure member, both of which are conveniently injection moulded from a plastics material such as polybutyleneterephthalate (PBT).

The annular insert may be a push snap fit into the aperture and may carry an annular sealing ring reacting between the insert and the housing.

Preferably the removable connection between the cover member and the annular insert comprises a push-and-turn bayonet type connection, co-operating ramped shoulders being formed internally on the annular insert and externally on the cover member, the cover member carrying an annular sealing ring reacting between the cover member and the annular insert.

The shoulders on the insert and on the cover member may be provided with co-operating means, for example lugs and recesses, for retaining the cover member in its fully inserted position in the insert.

By way of example only, an embodiment of the invention will now be described in greater detail with reference to the accompanying drawings of which:
Fig. 1 is a longitudinal section through a filter unit according to the invention;
Fig. 2 is an exploded view showing a cover member, an annular insert and parts of a cartridge and housing of a filter unit according to the invention;
Fig. 3 is a vertical section through an annular insert of a filter unit according to the invention, and
Fig. 4 is a side view of a cover member of a filter unit according to the invention.

The filter unit of the invention may be incorporated in a pump, tor example a vacuum pump, or a compressor, or may be a stand-alone unit for incorporation in a pressurised fluid flow line, and may be used to filter compressed gases, for example air, or liquids such as oil. The principle of the invention remains the same in all applications of the unit.

Referring to the drawings, the illustrated unit comprises a cast housing indicated generally at 2 in an end wall 4 of which is accurately machined a circular aperture 6, the thickness of the wall 4 bounding the aperture 6 also being accurately dimensioned.

An annular insert 8 of injection moulded plastics material such as PBT is a push snap-fit into the aperture 6 to be a sealing fit therein.

More particularly, the annular insert 8 includes four circumferentially spaced resilient fingers 10 extending rearwardly therefrom, each finger 10 defining an upstanding, forwardly facing lip 12 thereon.

An opposed upstanding, rearwardly facing circumferential lip 14 is formed externally on, to surround, the insert 8 adjacent the front extent of the outer surface thereof, the spacing between the lips 12, 14 being equal to the thickness of the end wall 4 of the housing 2 bounding the aperture.

The outer surface of the insert 8 is recessed to receive therein a sealing ring 16, the arrangement being such that the insert 8 is a push snap fit into the aperture 6, the lips 12 of the fingers 10 snapping behind the rear surface of the wall 4 as the lip 14 abuts the front surface of the wall 4, and the ring 16 sealing between the insert 8 and the aperture 6.

A cut-out 18 in the wall 4 of the housing 2 receives therein a corresponding radial projection 20 formed on the insert 8 thereby to locate the insert 8 rotationally relative to the housing 2, and to prevent any rotation thereof subsequent to insertion of the insert 8 into the aperture 6.

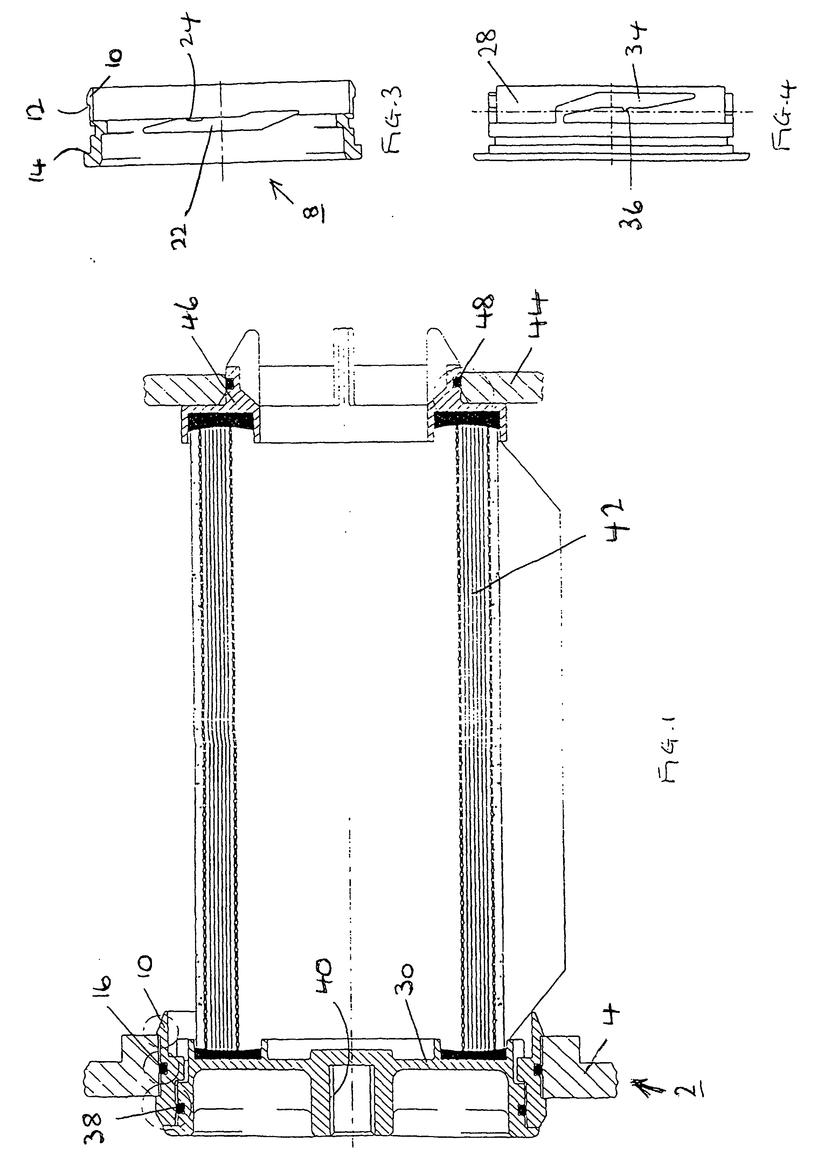

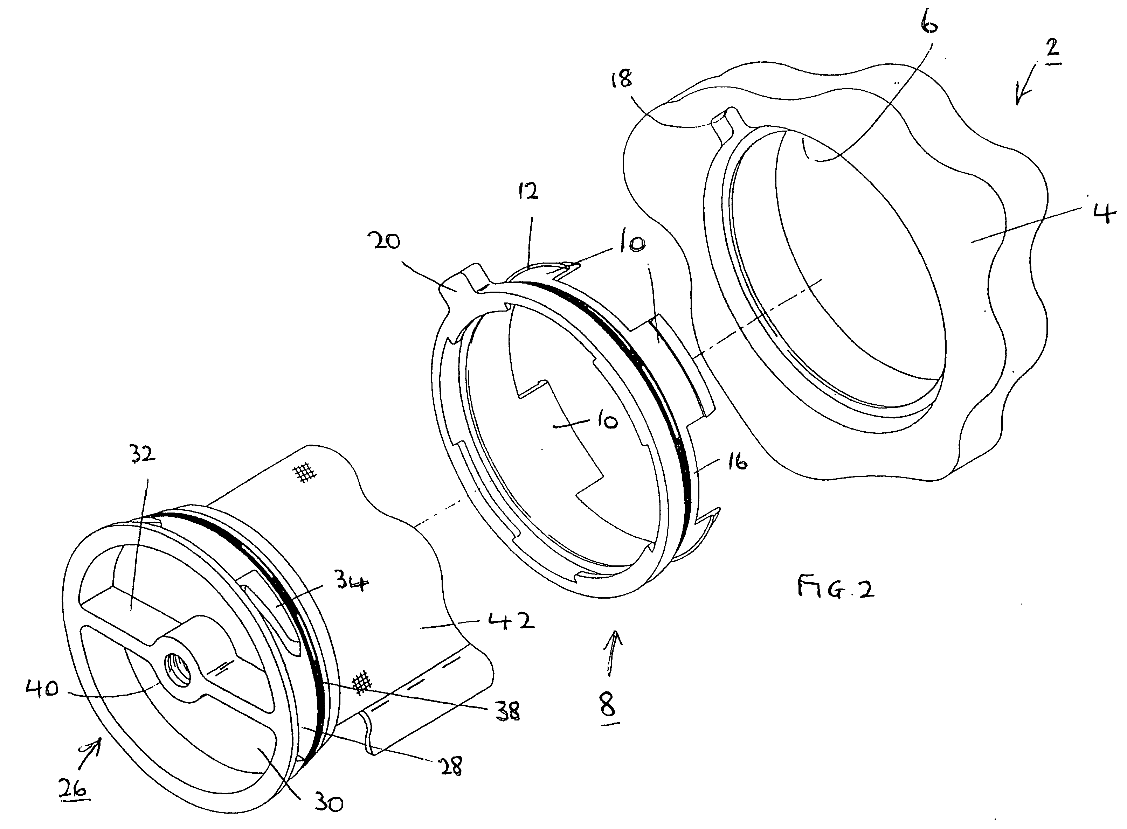

Three equi-spaced circumferentially extending shoulders 22 are provided on the inner surface of the insert 8 as best seen in Fig. 3, each end of each shoulder 22 being ramped as shown, and each shoulder incorporating a recess 24 adjacent one end thereof, all for reasons which will become apparent.

The filter unit further includes a cover member indicated generally at 26 injection moulded from a plastics material such as PBT. The cover member includes an annular sidewall 28 one end of which is closed by a transverse end plate 30, a handle portion 32 extending diametrically of the cover member 26 as best seen in Fig. 2.

Three equi-spaced, circumferentially extending shoulders 34 are moulded on the outer surface of the sidewall 28, each shoulder carrying a projection 36 thereon as best seen in Fig. 4, while the outer surface of the sidewall 28 is recessed to receive therein a sealing ring 38.

The configurations of the insert 8, the shoulders 22 thereon, the cover member 26 and the shoulders 34 thereon are such that the cover member 26 is a sealing push and turn fit in the insert 8. More particularly the insert 8 is initially located in the cover member 26 with the shoulders 22,34 circumferentially misaligned, the arrangement being such that, on subsequent axial pushing and turning of the cover member 26 by means of the handle portion 32, the ramped surfaces of the shoulders 22,34 engage one another, continued turning of the cover member 26 drawing the cover member 26 into the insert 8 to effect a fluid-tight seal therebetween with the sealing ring 38 sealing against the inner surface of the insert 8. In the fully inserted position of the cover member 26 within the insert 8, the projections 36 on the shoulders 34 are received within, to co-operate with, the recesses 24 in the associated shoulders 22 to retain the closed position of the cover member 26 pending subsequent removal achieved by reverse rotation of the cover member 26. The ramping of the shoulders 22,34 is such as to encourage and assist withdrawal of the cover member 26 from the insert 8 on said reverse rotation.

Rotation of the cover member 26 can be achieved by means of a suitable tool inserted in a central threaded recess 40 formed in the handle portion 32, or can be effected manually.

The filter unit is completed by a cylindrical cartridge 42 one end of which is mounted to the underside of the cover member 26, whereby the cartridge 42 and cover member 26 can be handled as a single unit. The cartridge 42 may be secured to, to be permanently connected to, the cover member 26, or may be releasably attached thereto whereby replacement cartridges 42 can be mounted on the same cover member 26.

An opposed end wall 44 of the housing 2 is provided with an aperture adapted to receive therein the other end of the cartridge 42, which comprises an end cap 46 carrying a sealing ring 48 and which is a sealing push fit into the aperture in the wall 44.

Thus it will be appreciated that, when it is necessary to remove the cartridge 42 from the housing 2 for the purpose of cleaning or replacement, it is merely necessary to rotate the cover member 26 relative to the insert 8 to release the cover member 26 from the insert 8 whereby the cover member 26 and attached cartridge 42 can be withdrawn from the housing 2 as a unit.

This procedure is reversed to enable the cartridge 42 or a replacement cartridge 42 to be located in the housing 2.

The sealing rings 38,48 are conveniently positioned axially such that initial sealing of the ring 48 with the aperture in the wall 44 is effected prior to initial engagement of the sealing ring 38 with the inner surface of the insert 8.

The filter unit of the invention is such that the co-operating components for enabling sealing mounting of the cartridge 42 in the housing 2 are provided on the injection moulded components 8,26, the only machining necessary to the housing 2 being to the wall 4 and aperture 6 whereby the insert 8 is an accurate sealing fit therein.

Clearly the co-operating means on the insert 8 and cover member 26 may be other than the described push and turn arrangement, for example screw threads, bayonet socket or the like.

Other modifications and variations from the described and illustrated arrangements will be apparent to those skilled in the art.

## Claims

1. A filter unit comprising a housing (2) through a wall (4) of which is formed an aperture (6), **characterised by** an annular insert (8) of a plastics material located in said aperture (6) to make sealing contact with the defining wall of the aperture (6), a closure member (26) removably mounted in, to make sealing engagement with, the annular insert (8), and a filter cartridge (42) mounted on the closure member (26) to extend into the housing (2), the closure member (26) and filter cartridge (42) being locatable on and removable from the housing (2) as a unit.

2. A filter unit as claimed in claim 1 in which the annular insert (8) and the closure member (26) are injection moulded from a plastics material such as polybutyleneterephthalate.

3. A filter unit as claimed in claim 1 or claim 2 in which the annular insert (8) is a push snap fit into the aperture (6).

4. A filter unit as claimed in claim 3 in which the annular insert (8) carries an annular sealing ring (16) reacting between the insert (8) and the housing (2).

5. A filter unit as claimed in any one of claims 1 to 4 in which the removable connection between the cover member (26) and the annular insert (8) comprises a push-and-turn bayonet type connection, co-operating ramped shoulders (22,34) being formed internally on the annular insert (8) and externally on the cover member (26), the cover member (26) carrying an annular sealing ring (38) reacting between the cover member (26) and the annular insert (8).

6. A filter unit as claimed in claim 5 in which the shoulders (22,34) on the insert (8) and on the cover member (26) are provided with co-operating means for retaining the cover member (26) in its fully inserted position on the insert (8).

7. A filter unit as claimed in claim 6 in which the co-operating means comprise lugs (36) and recesses (24).

## Patentansprüche

1. Filtereinheit Folgendes umfassend: ein Gehäuse (2), bei dem durch eine Wand (4) eine Öffnung (6) ausgebildet ist, **dadurch gekennzeichnet, dass** ein ringförmiger Einsatz (8) aus Kunststoffmaterial in der Öffnung angeordnet ist, um einen abdichtenden Kontakt mit der Begrenzungswand der Öffnung (6) auszubilden, ein Verschlusselement (26), das im ringförmigen Einsatz (8) abnehmbar montiert ist, um abdichtend in diesen einzugreifen, sowie eine Filterkartusche (42), die auf dem Verschlusselement (26) befestigt ist, um sich in das Gehäuse (2) zu erstrecken, wobei das Verschlusselement (26) und die Filterkartusche (42) als eine Einheit auf dem Gehäuse (2) angeordnet und von diesem entfernt werden können.

2. Filtereinheit nach Anspruch 1, worin der ringförmige Einsatz (8) und das Verschlusselement (26) aus einem Kunststoffmaterial wie Polybutylenterephthalat spritzgegossen sind.

3. Filtereinheit nach Anspruch 1 oder Anspruch 2, worin der ringförmige Einsatz (8) durch Druck-Schnapppassung in die Öffnung (6) eingebracht ist.

4. Filtereinheit nach Anspruch 3, worin der ringförmige Einsatz (8) einen ringförmigen Dichtungsring (16) trägt, der zwischen dem Einsatz (8) und dem Gehäuse (2) wirkt.

5. Filtereinheit nach einem der Ansprüche 1 bis 4, worin die entfembare Verbindung zwischen dem Abdeckelement (26) und dem ringförmigen Einsatz (8) eine Bajonettartige Druck-Dreh-Verbindung umfasst, wobei vorstehende zusammenwirkende Schultern (22, 34) innen auf dem ringförmigen Einsatz (8) und außen auf dem Abdeckelement (26) ausgebildet sind, wobei das Abdeckelement (26) einen ringförmigen Dichtungsring (38) trägt, der zwischen dem Abdeckelement (26) und dem ringförmigen Einsatz (8) wirkt.

6. Filtereinheit nach Anspruch 5, worin die Schultern (22, 34) auf dem Einsatz (8) und auf dem Deckelement (26) mit zusammenwirkenden Mitteln versehen sind, um das Abdeckelement (26) in seiner vollständig eingeführten Position auf dem Einsatz (8) zu halten.

7. Filtereinheit nach Anspruch 6, worin die zusammenwirkenden Mittel Nasen (36) und Vertiefungen (24) umfassen.

## Revendications

1. Unité de filtre comprenant un logement (2) ayant une paroi (4) à travers laquelle est formée une ouverture (6), **caractérisée par** un insert annulaire (8), en une matière plastique, placé dans ladite ouverture (6) de façon à établir un contact étanche avec la paroi de définition de l'ouverture (6), un élément de fermeture (26) monté de manière amovible dans l'insert annulaire (8) de façon à s'emboîter de manière étanche avec celui-ci, et une cartouche de filtre (42) montée sur l'élément de fermeture (26) de façon à s'étendre dans le logement (2), l'élément de fermeture (26) et la cartouche de filtre (42) pouvant être placés sur le logement (2) et retirés de celui-ci d'un seul tenant.

2. Unité de filtre selon la revendication 1, dans laquelle l'insert annulaire (8) et l'élément de fermeture (26) sont moulés par injection dans une matière plastique telle que du polybutylène téréphtalate.

3. Unité de filtre selon la revendication 1 ou la revendication 2, dans laquelle l'insert annulaire (8) est un élément à verrouillage rapide s'accrochant dans l'ouverture (6).

4. Unité de filtre selon la revendication 3, dans laquelle l'insert annulaire (8) porte une bague d'étanchéité annulaire (16) agissant entre l'insert (8) et le logement (2).

5. Un ité de filtre selon l'une quelconque des revendications 1 à 4, dans laquelle l'accouplement amovible entre l'élément formant couvercle (26) et l'insert annulaire (8) est constitué d'un accouplement de type à baïonnette autobloquante, des épaulements inclinés complémentaires (22, 34) étant formés sur une face interne de l'insert annulaire (8) et sur une face externe de l'élément formant couvercle (26), l'élément formant couvercle (26) portant une bague d'étanchéité annulaire (38) agissant entre l'élément formant couvercle (26) et l'insert annulaire (8).

6. Unité de filtre selon la revendication 5, dans laquelle les épaulements (22, 34) sur l'insert (8) et sur l'élément formant couvercle (26) sont pourvus de moyens complémentaires permettant de maintenir l'élément formant couvercle (26) dans sa position complètement insérée sur l'insert (8).

7. Unité de filtre selon la revendication 6, dans laquelle les moyens complémentaires sont constitués d'ergots (36) et d'encoches (24).
